# EUROPEAN PATENT SPECIFICATION

(11) **EP 1 385 405 B1**
(45) Date of publication and mention of the grant of the patent: **02.11.2006**
(21) Application number: 02713335.4
(22) Date of filing: 22.03.2002
(51) Int. Cl.: A47C 17/80

(54) **BED WITH VARIABLE SURFACE SIZE**
BETT MIT VARIABLER OBERFLÄCHENGRÖSSE
LIT SURFACE VARIABLE

(30) Priority: 23.03.2001 SE 0101024
(43) Date of publication of application: 04.02.2004
(73) Proprietor: Scania CV AB (publ), 151 87 Södertälje (SE)
(72) Inventor: HAKANSSON, Patrik, S-572 91 Oskarshamn (SE); SLEUTJES, Tom, NL-5482 TK Schijndel (NL); VERHOEVEN, Marc, NL-5482 TK Schijndel (NL); VAN RENS, Frans, NL-5652 CL Eindhoven (NL)
(86) International application number: PCT/SE2002/000584
(87) International publication number: WO 2002/076265

(56) References cited:
- DE-C1- 4 425 555
- SE-B- 409 408

## Description

### BACKGROUND TO THE INVENTION AND STATE OF THE ART

The present invention relates to a bed arrangement with a variable bed surface according to the preamble of claim 1. A bed surface means an accessible resting surface for a person who uses the bed arrangement.

In driving cabs of heavier vehicles a bed arrangement is often situated behind the driving seat and the passenger seat. As the space in driving cabs of vehicles is usually very limited, there is often no room for a permanently assembled bed arrangement with a desired width. In other cases the bed arrangement may fold down from a storage position. Manually converting a bed arrangement from a storage position to an active position entails a certain amount of difficulty, particularly in cramped spaces.

Beds with a variable surface are known from US 4 276 665, US 4 402 097 and US 5 996 145. The beds incorporate bed frames which may be adjustable in size. Accordingly, the beds are provided with a mattress corresponding to the size of the bed frame. In cramped spaces such as vehicle driving cabs, such a structure is not advantageous in that there is usually no extra space for storing mattresses.

A bed arrangement with an adjustable bed surface is known from US 4 826 235. A first bed element in the form of a first bed frame with mattress is arranged, when in a first position, under a second bed element in the form of a second bed frame with a mattress. A link mechanism makes it possible to move the second bed element to a second position beside the first element in order to provide the bed arrangement with a width corresponding to the sum of the bed surface of the first bed element and the bed surface of the second bed element. That bed arrangement is relatively bulky and appears to be difficult to manoeuvre in cramped spaces.

### SUMMARY OF THE INVENTION

The object of the present invention is to provide a bed arrangement suited to being used in cramped spaces. To this end, the design of the bed arrangement is such as to make it easy to adjust the bed surface of the bed arrangement to the size of the available space.

The object indicated above is achieved with the bed arrangement mentioned in the introduction which is characterised by the second bed surface being adjustable in size. This means that the second bed element can be adjusted to a size such that the total bed surface of the bed arrangement can be adapted in a substantially optimum manner to the size of an available space. This preferably involves the second bed surface being adjustable substantially continuously between a minimum and a maximum size. The minimum size of the second bed element is with advantage so small that the first bed element and the supplementing second bed element can remain constantly connected to one another even when the bed arrangement is not being used as a resting surface for a person. Such a second bed element thus does not have to be assembled to enable the bed arrangement to be used by a user, nor does it have to be disassembled after use.

According to a preferred embodiment of the present invention, the second bed element comprises a material body made of elastic material and bed arrangement means which allow shaping of the material body so that the second bed surface is adjustable in size. The material body comprises with advantage a foam plastic material. Such a foam plastic material may incorporate polyether. Such a material is inexpensive to purchase and has suitable elastic characteristics. Alternatively the bed element may comprise a foam polyester material or a cellular rubber material incorporating latex. Such relatively soft and porous material is relatively easy to compress by suitable means so that it occupies a variable surface within a broad range. With advantage, the material body is designed to fill an adjustable space formed between an edge portion of the first bed element and an edge portion of the second bed element. When in an uncompressed state, the size of the material body is with advantage such as to fill such a maximum space. Varying the distance between the edge portion of the first bed element and the edge element of the second bed element will thus subject the material body to different degrees of compression.

According to another preferred embodiment of the present invention, said connecting means make it possible to move the second bed element relative to the first bed element so that the second bed surface assumes said adjustable size. A bed arrangement incorporating connecting means which allow the first bed element and the second bed element to be placed in various positions relative to one another can be of relatively simple design. To this end, the connecting means may incorporate at least a suitably shaped portion of the second bed element, which portion is arranged for movement in a correspondingly shaped recess of the first bed element. Such a connecting means creates the possibility of substantially continuous positioning of the second bed element relative to the first bed element and hence substantially continuous adjustment of the size of the second bed surface. Said portion of the second bed element may incorporate a bottom plate designed to support said material body. The purpose of such a bottom plate is to provide stable support for the material body in the second bed element. The bottom plate comprises with advantage two symmetrically arranged protruding portions arranged for movement in accommodating recesses. The second bed element is thus provided with a stably guided movement relative to the first bed element.

According to another preferred embodiment of the present invention, a power device effects said movement of the second bed element relative to the first bed element in at least one direction. With advantage, the power device is an activable gas damper which, when gas is supplied to it, effects said movement of the second bed element relative to the first bed element. Conventional gas dampers usually incorporate a valve which regulates the gas quantity so that the gas damper allows the second bed element to be moved manually to, and be retained in, a desired position. Alternatively, the power device may be a pneumatic cylinder, a hydraulic cylinder or a corresponding electrically actuated power device. Such a power device is activated with advantage at least when it is desired to move the second bed element to an extended position. Activation of a power device results in a similar movement of the second bed element with a suitable force. The risk of oblique positioning of the second bed element relative to the first bed element is thus eliminated.

According to another preferred embodiment of the present invention, it is used in a driving cab in which the bed arrangement is arranged behind a driving seat and a passenger seat. In vehicle cabs it is very important to make optimum use of available space. In such cases the second bed element may be arranged behind a driving seat which is movable in the longitudinal direction of the vehicle, and a third bed element may be arranged behind a passenger seat which is movable in the longitudinal direction of the vehicle. The bed arrangement will thus be of symmetrical design and hence be usable in both right-hand and left-hand drive vehicles. When it is desired to use the bed arrangement, the driving seat and/or the passenger seat is/are moved to its/their forward position. This is followed by operating a control device, which may be a knob, button or lever, to a position initiating actuation of a power device which moves the second bed element to a position of maximum extension relative to the first bed element. A separate or common control device is used correspondingly to actuate another power device which moves the third bed element to a position of maximum extension. When the second bed element and the third bed element are in a state of maximum extension, the bed arrangement will have a substantially rectangular bed surface with a width corresponding to that of a conventional bed. After use of the bed arrangement, the driving seat and, where applicable, the passenger seat are moved rearwards to a suitable position of use. This entails the driving seat pushing the second bed element towards the first bed element, and the passenger seat pushing the third bed element towards the first bed element. Alternatively, the second and third bed elements may be pushed manually or by means of said power device. Converting the bed arrangement from an active position in which its size makes it usable as a resting surface to an inactive position in which its size is adapted to the available space is thus not at all complicated.

### BRIEF DESCRIPTION OF THE DRAWINGS

A preferred embodiment of the invention is described below by way of example with reference to the attached drawings, in which:
Fig. 1 depicts a view from above of a bottom plate structure for a bed arrangement according to the present invention,
Fig. 2 depicts the bottom plate structure in Fig. 1 provided with pads,
Fig. 3 depicts a sectional view along the line A-A in Fig. 2 and
Fig. 4 depicts a sectional view along the line B-B in Fig. 2.

### DETAILED DESCRIPTION OF A PREFERRED EMBODIMENT OF THE PRESENT INVENTION

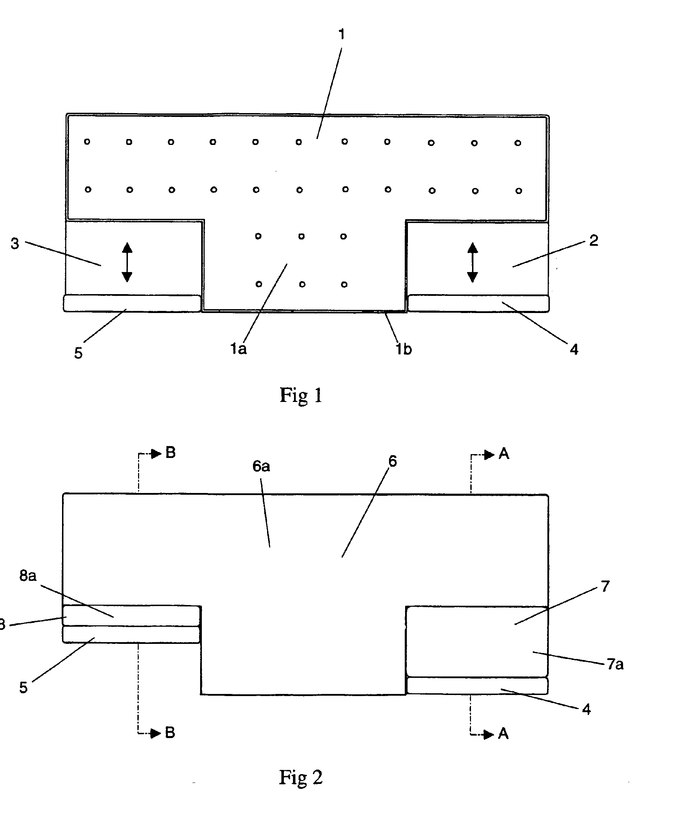

Fig. 1 depicts a view from above of a bottom plate structure for a bed arrangement designed to be fitted in a driving cab of a vehicle behind a driving seat and a passenger seat. The bottom plate structure comprises a first bottom plate 1 of a basic first bed element, a second bottom plate 2 of a supplementing second bed element and a third bottom plate 3 of a supplementing third bed element.

The second bottom plate 2 and the third bottom plate 3 are arranged for movement relative to the first bottom plate 1. Fig. 1 depicts the second bottom plate 2 and the third bottom plate 3 in an extended position. The bottom plates 1, 2, 3 form in this position a substantially rectangular bottom plate structure. Bottom plates 2 and 3 are continuously movable between said extended position and a retracted position. The second bottom plate 2 incorporates at an outer end an edge element 4, and the third bottom plate 3 incorporates at an outer end a corresponding edge element 5. The first bottom plate 1 incorporates a central portion 1a, the width of which corresponds to the width of the bottom plate structure. The central portion 1a is arranged between a driving seat and a passenger seat in the driving cab. The second bottom plate 2 is arranged behind the driving seat, and the third bottom plate 3 is arranged behind the passenger seat. The bottom plate structure is with advantage fastened hingingly to the rear wall of the driving cab. The bottom plate structure as a whole can therefore be folded up to a storage position in which it extends substantially parallel with said wall.

The first bottom plate 1 incorporates an edge portion 1b extending upwards which is arranged round the whole first bottom plate 1. A first pad 6 (see Fig. 2) is arranged on the bottom plate 1 and is held in place by said edge portion 1b. Alternatively, the first pad 6 may be fastened to the first bottom plate 1 in a suitable manner. The first pad exhibits a bed surface 6a which forms part of the total bed surface of the bed arrangement. A supplementing second pad 7 is arranged on the second bottom plate 2. The second pad 7 comprises a material body with elastic characteristics and has a shape such that in an unstressed state it at least fills the space formed between the edge element 4 and a delineating edge surface of the first bed element. The second pad 7 incorporates with advantage a foam polyether material. As the edge element 5 is arranged for movement relative to the first bed element, the second pad 7 exhibits a bed surface 7a which is adjustable in size. A supplementing third pad 8 is arranged correspondingly on the third bottom plate 3. The third pad 8 comprises a material body with elastic characteristics and has a shape such that in an unstressed state it at least fills the space formed between the edge element 5 and a delineating edge surface of the first bed element. The third pad 8 likewise incorporates with advantage a foam polyester material. As the space may be given a variable size, the third pad 8 exhibits accordingly a bed surface 8a which is adjustable in size. In Fig. 2, the edge element 5 of the third bottom plate 3 has been moved to a position of substantially maximum retraction. The third pad 8 has thereby been substantially compressed and the bed surface 8a has been reduced considerably.

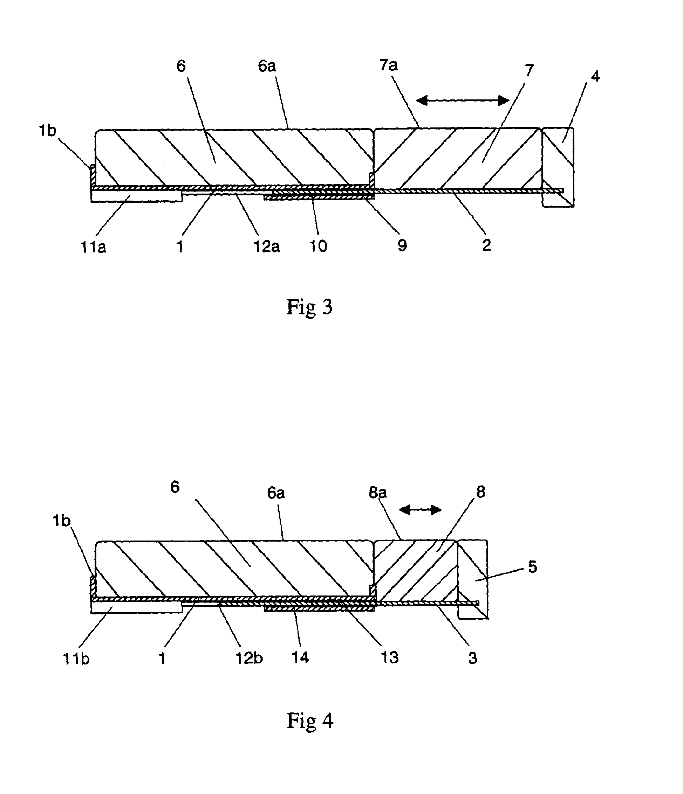

Fig. 3 depicts a section along the line A-A in Fig. 2. The first pad 6 comprises with advantage a similar material to the second pad 7 and its extent in the vertical direction is such that a user substantially perceives the pads as one integral pad. The first pad 6 is thus arranged on the bottom plate 1 and is held in place by the peripheral edge portion 1b. The second pad 7 is arranged on the bottom plate 2 so as to cover the space formed between the edge portion 4 and an edge surface of the first pad 6. The edge portion 4 is made of a substantially rigid material. The bottom plate 2 comprises at least one protruding portion 9 which extends into a recess 10 formed on the underside of the first bottom plate 1. A power device in the form of a first activable gas damper 11a is arranged on the underside of the first bottom plate 1. The gas damper 1 la incorporates an extendable piston rod 12a connected to the protruding portion 7 of bottom plate 2. Applying a force to the edge portion 4 in the direction of the first bed element causes the protruding portion 9 of the second bottom plate 2 to move inwards in the recess 10. The edge portion 4 thereby compresses the second pad 7.

Fig. 4 depicts a section along the line B-B in Fig. 2. Here the edge portion 5 has effected substantially maximum compression of the third pad 8. The pad 8 thus exhibits a relatively small bed surface 8a. The bottom plate 3 likewise incorporates here a protruding portion 13 which extends into a recess 14 arranged on the underside of the first bottom plate 1. A power device in the form of a second activable gas damper 11b is arranged on the underside of the first bottom plate 1. The gas damper 11b incorporates a piston rod 12b connected to the protruding portion 13 of the bottom plate 3. Applying a force to the edge portion 5 in the direction of the first bed element causes the protruding portion 13 of the third bottom plate 3 to move inwards in the recess 14. The edge portion 5 thereby compresses the second pad 8 and reduces its bed surface 8a.

The bed arrangement described above is used with advantage in a driving cab of a vehicle in which a driving seat and a passenger seat are arranged for movement in the longitudinal direction of the vehicle. The driving seat is arranged in front of the second bed element which incorporates the second pad 7, and the passenger seat is arranged in front of the third bed element which incorporates the pad 8. The driver can move the driving seat to a desired position. The driving seat thereby pushes the edge element 4 rearwards so that the second pad 7 is compressed. To ensure that the second pad 7 does not leave the space during said movement, at least one portion of the pad 7 may be permanently connected to the edge element 4. The protruding portion 9 of the bottom plate 2 of the second bed element is pushed into the recess 10. The protruding portion 9 pushes in the piston rod 12a to a corresponding extent in the first gas damper 11a, which is thus not activated. The first gas damper 11a incorporates with advantage a valve which allows a gas flow so that the piston rod 12a and hence the second bed element are retained in the pushed-in position relative to the first bed element. In a corresponding manner, a passenger may move the passenger seat to a desired position. The passenger seat thus pushes the edge element 5 rearwards so that the third pad 8 is compressed in the space between the edge element 5 and an edge surface of the first pad 6. To ensure that the third pad 8 does not leave the space during said movement, at least one portion of the pad 8 should be connected permanently to the edge element 5. The protruding portion 13 of the bottom plate 3 of the second bed element is pushed into the recess 14. The protruding portion 13 pushes the piston rod 12b a corresponding distance into the second gas damper 11b. The second gas damper 11b likewise incorporates a valve which allows a gas flow so that the third bed element is retained in the pushed-in position relative to the first bed element. As the pads 7,8 are made of foam plastic material which is relatively soft and porous, there is relatively little resistance to the driving seat and the passenger seat respectively being moved rearwards with compression of the pads 7,8. It is also possible for the second bed element and the third bed element to be pushed rearwards manually. The gas dampers 11a, 11b may thus also be used for movement in this direction.

When the bed arrangement is to be used for resting, two separate control devices or one common control device, which may be a suitably positioned knob, button or lever in the driving cab, has/have to be operated. The control device/devices initiates/initiate supply of compressed air to the gas dampers 11a, 11b, and the piston rods 12a, 12b move outwards. The bottom plate 2 of the second bed element and the bottom plate of the third bed element move outwards until they reach a maximum extended position. The pads 7,8 expand to fill the extended space between the first pad 6 and the edge elements 4,5.
When the second and third bed elements are in their extended positions, the bed arrangement forms a rectangular bed surface which comprises the bed surface 6a of the first bed element, the bed surface 7a of the second bed element and the bed surface 8a of the third bed element. If there are two separate control devices, the second and third bed elements may be operated individually. This facility may be utilised if, for example, the driver has his/her seat in a relatively rearward position while the passenger is resting on the bed, in which case only the bed element behind the passenger seat is extended. Using power devices such as, for example, activable gas dampers 11a, 11b to extend the respective second and third bed surfaces 7a, 8a results in a uniformly controlled movement using matching force so that risk of oblique positioning of the various parts which are arranged for movement relative to one another, what is known as office drawer effect, is obviated.

With the present invention it is thus very easy to convert a bed arrangement from an 5 active position in which it has a bed surface large enough to be usable for resting to an inactive position in which the size of its bed surface is adapted to the available space.

The present invention is in no way limited to the embodiments described above and depicted in the drawings but may be modified freely within the scopes of the patent claims. For example, a supplementing bed element may have an extent along the whole length of the bed arrangement. In such cases the width of the bed arrangement may be adjusted by moving only one supplementing bed element. Supplementing bed elements may also be used correspondingly for adjustably altering the length of a bed arrangement.

The present bed arrangement is used with advantage in cramped spaces without preventing the possibility of it being used in substantially all contexts where a variable bed surface is desired.

## Claims

1. A bed arrangement with a variable bed surface, whereby the bed arrangement comprises a first bed element with a first bed surface (6a), at least a supplementing second bed element with a second bed surface (7a) and connecting means (9,10) which allow positioning of the second bed element relative to the first bed element so that the bed arrangement has a bed surface which comprises the first bed surface (6a) and the second bed surface (7a), **characterised in that** the bed arrangement is used in a driving cab of a vehicle, in which case the bed arrangement is arranged behind a driving seat and a passenger seat and **in that** the second bed surface (7a) is of adjustable size, wherein the second bed element can be adjusted to a size such that the total bed surface of the bed arrangement can be adapted in a substantially optimum manner to the size of an available space.

2. A bed arrangement according to claim 1, **characterised in that** the second bed element comprises a material body (7) made of elastic material and bed arrangement means which allow shaping of the material body (7) so that it is possible to adjust the size of the second bed surface (7a).

3. A bed arrangement according to claim 2, **characterised in that** the second bed element comprises a material body (7) made of a foam polyether material.

4. A bed arrangement according to claim 2 or 3, **characterised in that** the material body (7) is designed to fill an adjustable space formed between a edge portion of the first bed element and an edge element (4) of the second bed element.

5. A bed arrangement according to any one of the foregoing claims, **characterised in that** said connecting means (9,10) allow movement of the second bed element relative to the first bed element, thereby enabling adjustment of the size of the second bed surface (7a).

6. A bed arrangement according to claim 5, **characterised in that** said connecting means comprise at least one portion (9) of the second bed element, which portion (9) is arranged for movement in an accommodating recess (10) of the first bed element.

7. A bed arrangement according to claim 6, **characterised in that** said portion (9) of the second bed element incorporates a bottom plate (2) designed to support said material body (7).

8. A bed arrangement according to any one of the foregoing claims 5-7, **characterised in that** a power device (11a) makes said movement of the second bed element relative to the first bed element possible in at least one direction.

9. A bed arrangement according to any of the foregoing claims, **characterised in that** the second bed element is arranged for movement in at least one direction by means of movement of said driving seat, and the third bed element is arranged for movement in at least one direction by means of movement of said passenger seat.

## Patentansprüche

1. Bettanordnung mit variabler Bettfläche, wobei die Bettanordnung ein erstes Bettelement mit einer ersten Bettfläche (6a), wenigstens ein zusätzliches zweites Bettelement mit einer zweiten Bettfläche (7a) und Verbindungsmittel (9, 10) umfasst, die eine Positionierung des zweiten Bettelements relativ zu dem ersten Bettelement erlauben, so dass die Bettanordnung eine Bettfläche aufweist, die die erste Bettfläche (6a) und die zweite Bettfläche (7a) umfasst,
**dadurch gekennzeichnet, dass** die Bettanordnung in einer Fahrerkabine eines Fahrzeugs eingesetzt wird, wobei in diesem Fall die Bettanordnung zwischen einem Fahrersitz und einem Passagiersitz angeordnet ist, und dass die zweite Bettfläche (7a) verstellbare Größe aufweist, wobei das zweite Bettelement auf eine derartige Größe eingestellt werden kann, dass die gesamte Bettfläche der Bettanordnung in im Wesentlichen optimaler Weise an die Größe eines verfügbaren Raumes angepasst werden kann.

2. Bettanordnung nach Anspruch 1,
**dadurch gekennzeichnet, dass** das zweite Bettelement einen Materialkörper (7) aufweist, der aus einem elastischen Material hergestellt ist, und Bettanordnungsmittel umfasst, die ein Formen des Materialkörpers (7) derart ermöglichen, dass es möglich wird, die Größe der zweiten Bettfläche (7a) einzustellen.

3. Bettanordnung nach Anspruch 2,
**dadurch gekennzeichnet, dass** das zweite Bettelement einen Materialkörper (7) umfasst, der aus einem Schaum-Polyether-Material hergestellt ist.

4. Bettanordnung nach Anspruch 2 oder 3,
**dadurch gekennzeichnet, dass** der Materialkörper (7) derart ausgebildet ist, dass er einen einstellbaren Raum ausfüllt, der zwischen einem Randbereich des ersten Bettelements und einem Randelement (4) des zweiten Bettelements ausgebildet ist.

5. Bettanordnung nach einem der vorangehenden Ansprüche,
**dadurch gekennzeichnet, dass** die Verbindungsmittel (9, 10) eine Bewegung des zweiten Bettelements relativ zu dem ersten Bettelement zulassen, wodurch eine Einstellung der Größe der zweiten Bettfläche (7a) möglich wird.

6. Bettanordnung nach Anspruch 5,
**dadurch gekennzeichnet, dass** die Verbindungsmittel wenigstens einen ersten Abschnitt (9) des zweiten Bettelements umfassen, wobei der Abschnitt (9) für eine Bewegung in einer Aufnahmeausnehmung (10) des ersten Bettelements angeordnet ist.

7. Bettanordnung nach Anspruch 6,
**dadurch gekennzeichnet, dass** der Abschnitt (9) des zweiten Bettelements eine Bodenplatte (2) umfasst, die dazu ausgebildet ist, den Materialkörper (7) zu stützen.

8. Bettanordnung nach einem der vorangehenden Ansprüche 5 bis 7,
**dadurch gekennzeichnet, dass** eine Kraftvorrichtung (11a) die Bewegung des zweiten Bettelements relativ zu dem ersten Bettelement in wenigstens einer Richtung ermöglicht.

9. Bettanordnung nach einem der vorangehenden Ansprüche,
**dadurch gekennzeichnet, dass** das zweite Bettelement für eine Bewegung in wenigstens einer Richtung mittels einer Bewegung des Fahrersitzes angeordnet ist und dass das dritte Bettelement für eine Bewegung in wenigstens einer Richtung mittels einer Bewegung des Passagiersitzes angeordnet ist.

## Revendications

1. Agencement de lit avec une surface de lit variable, dans lequel l'agencement de lit comprend un premier élément de lit avec une première surface de lit (6a), au moins un deuxième élément de lit supplémentaire avec une deuxième surface de lit (7a) et des moyens de liaison (9, 10) qui permettent le positionnement du deuxième élément de lit par rapport au premier élément de lit de sorte que l'agencement de lit présente une surface de lit qui comprend la première surface de lit (6a) et la deuxième surface de lit (7a), **caractérisé en ce que** l'agencement de lit est utilisé dans une cabine de conduite d'un véhicule, auquel cas l'agencement de lit est agencé derrière un siège de conducteur et un siège de passager et **en ce que** la deuxième surface de lit (7a) est d'une dimension ajustable, dans lequel le deuxième élément de lit peut être ajusté à une dimension telle que la surface de lit totale de l'agencement de lit peut être adaptée d'une façon essentiellement optimum à la dimension d'un espace disponible.

2. Agencement de lit selon la revendication 1, **caractérisé en ce que** le deuxième élément de lit comprend un corps de matériau (7) réalisé en un matériau élastique et un moyen d'agencement de lit qui permet la conformation du corps de matériau (7) de sorte qu'il est possible d'ajuster la dimension de la deuxième surface de lit (7a).

3. Agencement de lit selon la revendication 2, **caractérisé en ce que** le deuxième élément de lit comprend un corps de matériau (7) réalisé en un matériau de mousse de polyether.

4. Agencement de lit selon la revendication 2 ou 3, **caractérisé en ce que** le corps de matériau (7) est conçu pour remplir un espace ajustable formé entre une partie de bord du premier élément de lit et un élément de bord (4) du deuxième élément de lit.

5. Agencement de lit selon l'une quelconque des revendications précédentes, **caractérisé en ce que** lesdits moyens de liaison (9, 10) permettent le mouvement du deuxième élément de lit par rapport au premier élément de lit, permettant ainsi l'ajustement de la dimension de la deuxième surface de lit (7a).

6. Agencement de lit selon la revendication 5, **caractérisé en ce que** lesdits moyens de liaison comportent au moins une partie (9) du deuxième élément de lit, laquelle partie (9) est agencée pour un mouvement dans un évidement d'adaptation (10) du premier élément de lit.

7. Agencement de lit selon la revendication 6, **caractérisé en ce que** ladite partie (9) du deuxième élément de lit comprend une plaque inférieure (2) destinée à supporter ledit corps de matériau (7).

8. Agencement de lit selon l'une quelconque des revendications précédentes 5 à 7, **caractérisé en ce qu'**un dispositif de puissance (11a) rend possible dans au moins une direction ledit mouvement du deuxième élément de lit par rapport au premier élément de lit.

9. Agencement de lit selon l'une quelconque des revendications précédentes, **caractérisé en ce que** le deuxième élément de lit est agencé pour un mouvement dans au moins une direction au moyen du mouvement dudit siège de conducteur et le troisième élément de lit est agencé pour un mouvement dans au moins une direction au moyen du mouvement dudit siège de passager.
